**Europäisches Patentamt**

**European Patent Office**

**Office européen des brevets**

(11) Publication number: **0 046 060**

**A1**

## EUROPEAN PATENT APPLICATION

(21) Application number: **81303591.2**

(51) Int. Cl.³: **B 27 B 11/04**

(22) Date of filing: **05.08.81**

(30) Priority: **13.08.80 AU 4997/80**
**16.10.80 AU 63453/80**

(43) Date of publication of application:
**17.02.82 Bulletin 82/7**

(84) Designated Contracting States:
**CH DE FR GB IT LI NL SE**

(71) Applicant: **Covington, Gordon Walter**
**Unit 8, 9/11 Ewas Parade Cronulla**
**New South Wales, 2230(AU)**

(72) Inventor: **Covington, Gordon Walter**
**Unit 8, 9/11 Ewas Parade Cronulla**
**New South Wales, 2230(AU)**

(74) Representative: **Meddle, Alan Leonard**
**FORRESTER & BOEHMERT Widenmayerstrasse 41**
**D-8000 Munchen 22(DE)**

(54) **Power saw guide.**

(57) A power saw guide has a base (10) adapted to be clamped to a work piece which is located between a clamping screw (13) and a flange (12) of the base with a pivotally adjustable guide bar (11) mounted on the base plate to provide a guide edge (11a) for guiding the edge of a base plate of a power saw. Rapid coarse positioning of the clamping screw (13) is effected by a mounting arrangement comprising a mounting bracket (14) for the guide screw connected by a pair of guide rods (15) slidably engaged in transverse bores in mounting blocks (16) secured to the base (10), with securing screws (19) being provided for securing the guide rods (15) in the desired position.

FIG. 1

EP 0 046 060 A1

-1-

## POWER SAW GUIDE

The present invention relates to a guide for a hand-held power saw.

Hand-held power saws, for example circular saws or jig saws, are widely used both by the amateur and professional carpenters for cutting pieces of timber. However, unless one is very skilled, it can be difficult to make a clean straight cut along a marked line using such a power saw. This is particularly so when trimming rafters on a building site and when doing other awkward jobs which require accuracy with the carpenter working in an awkward position.

Conventional practice both with hand saws and power saws is for the carpenter to mark the work piece with a line of cut and then to attempt to follow the line by hand. Whilst reasonably accurate cuts can be made even with hand saws for example by using mitre boxes on a work bench, frequently on construction sites the carpenter must work in awkward positions and hitherto there has not been available any convenient, effective and easily used guide to facilitate rapid and accurate cutting of work pieces at angles.

The present invention is directed to the provision of a guide for power saws to enable more accurate and effective use thereof.

According to the present invention there is provided a power saw guide comprising a base, means for clamping the base to a piece of material to be cut when using the guide, a guide bar, means for pivotally connecting the guide bar to the base for relative movement over a given range about an axis at right angles to a first face of said piece of material over which said guide bar is to extend when in use, and means for releasably securing the guide bar to the base at any position within said range.

Although a single device could be used for connecting the guide bar and base and for releasably securing the parts in the selected position, preferably a nut and bolt is used for the pivotal connection and a second nut and bolt is used for releasably securing the guide bar to the base, one of the parts having an arcuate slot through which the second bolt passes. For ease of adjustment, the nut in each case is preferably a wing nut.

In a preferred embodiment the base has a flange along one edge and said clamping means comprises a clamping member screw threadably engaged on the opposite side of the base to the flange so that second and third faces of the piece of material extending at right angles to said first face may be clamped between the flange and the clamping member.

Preferably, the base is of plate-like form having mounting blocks on the upper face thereof with apertures therein for slidably receiving a pair of parallel guide rods which may be clamped at any desired position, the guide rods extending parallel to the plane of the base and at right angles to said flange and the guide rods supporting on their free ends a mounting bracket for the clamp member.

In a preferred embodiment the guide bar is in the form of a planar member provided with a flange along an edge for guiding the base plate of a power saw, the flange extending at right angles away from said first face of the material to be cut.

The present invention permits the user of a power saw to cut oblique cuts through pieces of timber and the like with accuracy, convenience and speed, yet very little skill is required to operate the guide according to the present invention. Furthermore, where a series of cuts at the same angle are required, the user can simply set the guide once and by simply unclamping the guide after a first cut the guide can be transferred to a second cutting position and a further cut can be made at the same angle.

At least in a preferred embodiment the invention can be constructed in a robust and simple form at moderate cost.

For illustrative purposes only an embodiment of the invention will now be described with reference to the accompanying drawings, of which,

Figure 1 is an exploded perspective view of an embodiment of the invention; and

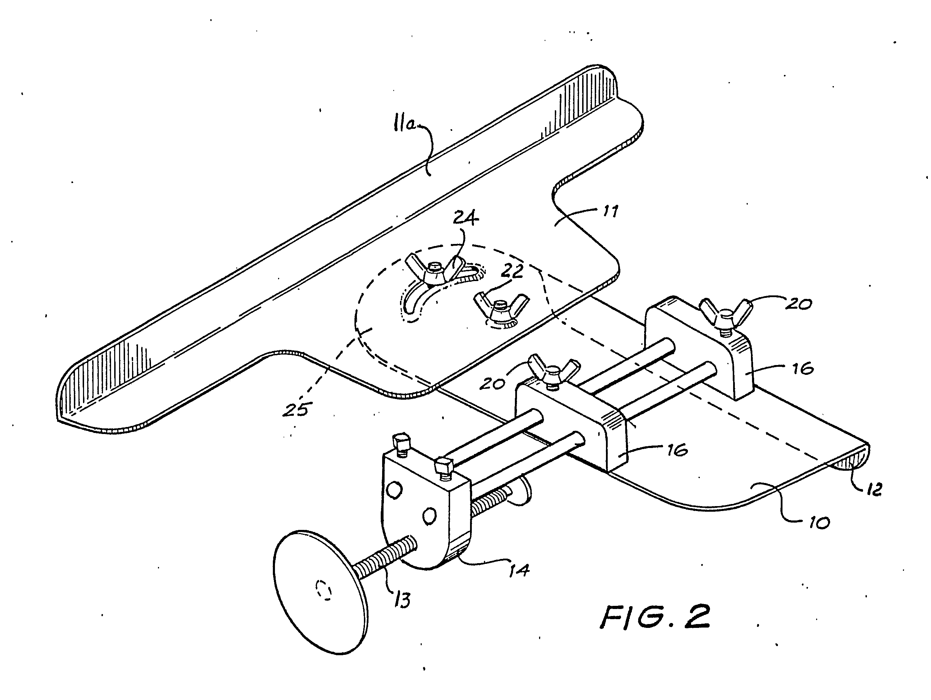

Figure 2 is a perspective view of the guide when assembled.

Generally, power saws such as circular saws and jig saws have a rectangular flat base plate with the saw blade extending through a slot in the base plate and longitudinal edges of the base plate extend in the same direction as the cutting line. In the present invention a guide bar is provided for guiding a longitudinal side of the base plate of a power saw.

The guide illustrated in the drawings comprises a base 10, a generally T-shaped guide bar 11 pivotally connected to the base 10 and a clamping screw 13 arranged so that a piece of timber or the like can be clamped between a downturned flange 12 on the base and the clamping screw 13. Thus faces of the timber extending at right angles from the face to be cut are clamped to secure the guide to the piece of timber so that the user has both hands free to operate the power saw and thus the device contributes to safe and accurate working.

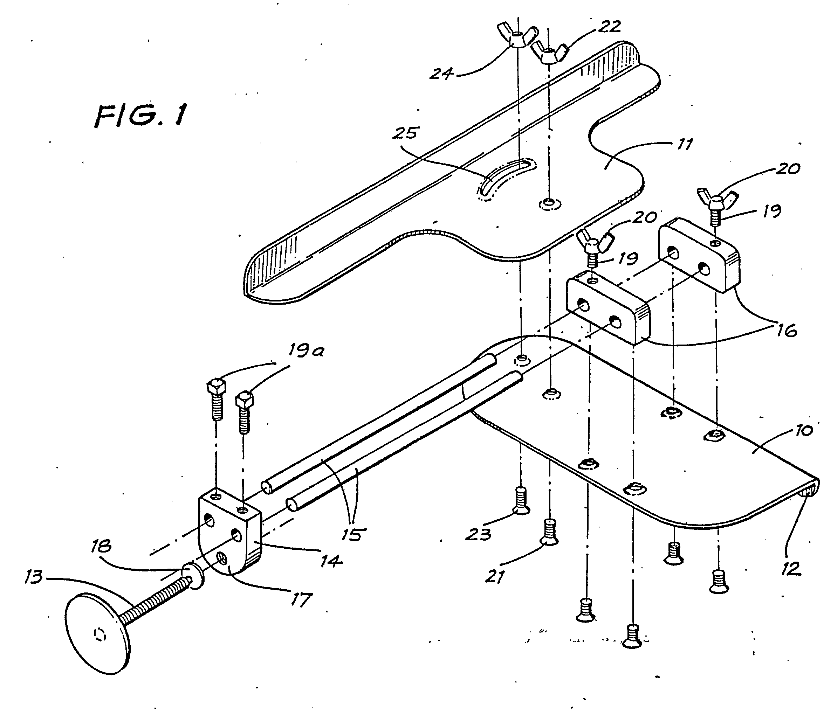

From Figure 1 it will be noted that the base 10 has holes for receiving screws, the holes being in "dimpled" portions of the base plate for accommodating the countersunk heads of various fixing screws described hereinafter. Thus the base plate can be economically formed in sheet metal.

The guide bar 11 is secured to the base 10 by a first screw 21 and wing nut 22 which provides a pivotal connection. The guide bar has an arcuate slot 24 for accommodating a second screw 23 which has a wing nut 24 which when tightened clamps the guide bar in the desired position relative to the base. It will be noted that the guide bar 11 has an upstanding flange 11a which guides the rectangular base plate of the power saw.

The clamping screw 13 is screw threadably engaged in a mounting bracket 14 which is adjustably mounted by a pair of parallel rods 15 to mounting blocks 16 secured by screws to the base 10, the underside of the mounting block 16 having screw threaded bores for receiving the screws and counterbores for receiving the dimpled portions of the base around the screw holes. The guide rods 15 pass slidably through respective transverse bores in the mounting block 16 and can be clamped in any desired position by clamping screws 19 having wing heads 20 to facilitate manual tightening of the screws. By moving the guide rods through the mounting blocks a rapid coarse adjustment of the position of the clamping screw 13 is effected.

Normally the guide rods 15 are clamped in bores in the mounting bracket 14 by square headed screws 19a.

In order to spread the clamping load and avoid bruising a timber workpiece, the clamping screw 13 has a plate-like head 18.

Normally the angle of the guide bar relative to the base 10 will first be set before the guide is clamped to a piece of timber or the like. However, it will be appreciated that the guide bar may be changed in angle whilst clamped to a piece of timber.

CLAIMS:

1. A power saw guide comprising a base (10), means (12, 13) for clamping the base to a piece of material to be cut when using the guide, a guide bar (11), means (21, 22) for pivotally connecting the guide bar to the base for relative movement over a given range about an axis at right angles to a first face of said piece of material over which said guide bar is to extend when in use, and means (23, 24) for releasably securing the guide bar to the base at any position within said range.

2. A power saw guide as claimed in claim 1, wherein the base (10) has a flange (12) extending along one edge thereof for engagement with a second face of the material to be cut, said second face extending at right angles to said first face, and said clamping means comprises a clamp screw member (13) engageable with the base and arranged to clamp against a third face of the material to be cut and on the opposite side of the material to said second face.

3. A power saw guide as claimed in claim 2, wherein said clamp screw member (13) is screw threadably engaged on a mounting bracket (14) which is adjustably mounted on a guide bar arrangement (15, 16) and is arranged to be secured at a selected position relative to the base, adjustment being along the direction in which the clamp screw member (13) operates.

4. A power saw guide as claimed in claim 3, wherein the guide bar arrangement comprises a pair of parallel rods (15) slidably passing through respective bores in two mounting blocks (16) secured to the base (10), clamping screws (19) being provided for securing the guide rods (15) at a desired location, thereby permitting rapid coarse adjustment of the position of the screw member (13).

5.  A power saw guide as claimed in any one of claims
1 to 4, wherein the connecting means comprises a nut
(22) and bolt (21) and either the guide bar (11) or the
base (10) has an arcuate slot (25), the centre of the
arc being said nut and bolt and said securing means
comprises a further nut (24) and bolt (23), the further
bolt passing through the arcuate slot (25) and arranged
for clamping the guide bar (11) and base (10) at the
desired relative position.

6.  A power saw guide as claimed in any one of claims
1 to 5, wherein the guide bar (11) is generally T-
shaped with the head of the T providing a guide face
(11a) for a power saw base plate and the leg of the T
being the portion at which engagement with said connecting
means and said securing means occurs.

7.  A power saw guide as claimed in any one of claims
1 to 6, wherein the guide bar (11) is of generally
planar form with an upturned flange (11a) extending
along an edge remote from said connecting means, the
flange acting to guide the base plate of a power saw.

FIG.1

0046060

1/6

FIG. 2

## EUROPEAN SEARCH REPORT

European Patent Office

Application number

EP 81 30 3591.2

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | GB - A - 1 508 236 (V. HOYLE)  <br> * page 2, lines 23 to 105; fig. 1 * <br> -- | 1,3,4 | B 27 B 11/04 |
| X | US - A - 2 773 523 (L.M. HOPLA)  <br> * claims 1 to 5; fig. 1 to 10 * <br> ----- | 1,2, <br> 5,7 | |

TECHNICAL FIELDS SEARCHED (Int. Cl.³)

B 27 B 5/00
B 27 B 9/00
B 27 B 11/00
B 27 B 27/10

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 04-11-1981 | HOFFMANN |

EPO Form 1503.1  06.78